(19) Europäisches Patentamt / European Patent Office / Office européen des brevets

(11) **EP 1 954 722 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **06819481.0**

(22) Anmeldetag: **15.11.2006**

(51) Int Cl.:
***C08F 4/12*** *(2006.01)* ***C08F 10/10*** *(2006.01)*

(86) Internationale Anmeldenummer:
**PCT/EP2006/068467**

(87) Internationale Veröffentlichungsnummer:
**WO 2007/057405 (24.05.2007 Gazette 2007/21)**

# (54) VERFAHREN ZUR HERSTELLUNG VON HOCHREAKTIVEN ISOBUTENHOMO- ODER -COPOLYMEREN MITTELS METALLHALTIGER KATALYSATORKOMPLEXE

METHOD FOR PRODUCING HIGHLY REACTIVE ISOBUTYLENE HOMO- OR COPOLYMERS USING METAL-CONTAINING CATALYST COMPLEXES

PROCEDE POUR PRODUIRE DES HOMOPOLYMERES OU COPOLYMERES D'ISOBUTENE TRES REACTIFS AU MOYEN DE COMPLEXES CATALYTIQUES CONTENANT DU METAL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.11.2005 DE 102005055818**

(43) Veröffentlichungstag der Anmeldung:
**13.08.2008 Patentblatt 2008/33**

(73) Patentinhaber: **BASF SE**
**67056 Ludwigshafen (DE)**

(72) Erfinder:
- **HANEFELD, Phillip**
  **69115 Heidelberg (DE)**
- **SIGL, Marcus**
  **68167 Mannheim (DE)**
- **BÖHM, Volker**
  **67227 Frankenthal (DE)**
- **RÖPER, Michael**
  **67157 Wachenheim (DE)**
- **WALTER, Hans-Michael**
  **67251 Freinsheim (DE)**
- **KROSSING, Ingo**
  **79104 Freiburg I. Br. (DE)**

(56) Entgegenhaltungen:
- **KROSSING, INGO ET AL: "Perfluorinated alkoxyaluminate salts of cationic Bronsted acids: Synthesis, structure, and characterization of [H(OEt2)2][Al{OC(CF3)3}4] and [H(THF)2][Al{OC(CF3)3}4]" EUROPEAN JOURNAL OF INORGANIC CHEMISTRY , (10), 1979-1989 CODEN: EJICFO; ISSN: 1434-1948, 2005, XP002418619**
- **DATABASE CA [Online] CHEMICAL ABSTRACTS SERVICE, COLUMBUS, OHIO, US; IKAI, YOJIRO ET AL: "Preparation of N-substituted maleimide-olefin copolymers with economical recovery of residual olefins" XP002418648 gefunden im STN Database accession no. 2005:1074019 & JP 2005 272524 A (TOSOH CORP., JAPAN) 6. Oktober 2005 (2005-10-06)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 954 722 B1

## Beschreibung

Die vorliegende Erfindung betrifft ein Verfahren zur Herstellung von hochreaktiven Isobutenhomo- oder -copolymeren mit einem zahlenmittleren Molekulargewicht $M_n$ von 500 bis 1.000.000 durch Polymerisation von Isobuten oder eines Isobuten-haltigen Monomergemisches in flüssiger Phase in Gegenwart eines gelösten, dispergierten oder geträgerten metallhaltigen Katalysatorkomplexes.

Unter hochreaktiven Polyisobutenhomo- oder -copolymeren versteht man im Unterschied zu den sogenannten niedrigreaktiven Polymeren solche Polyisobutene, die einen hohen Gehalt an terminal angeordneten ethylenischen Doppelbindungen enthalten. Im Rahmen der vorliegenden Erfindung sollen unter hochreaktiven Polyisobutenen solche Polyisobutene verstanden werden, die einen Anteil an Vinyliden-Doppelbindungen ($\alpha$-Doppelbindungen) von wenigstens 60 Mol-%, vorzugsweise von wenigstens 70 Mol-% und insbesondere von wenigstens 80 Mol-%, bezogen auf die Polyisobuten-Makromoleküle, aufweisen. Unter Vinylidengruppen werden im Sinne der vorliegenden Anmeldung solche Doppelbindungen verstanden, deren Lage im Polyisobuten-Makromolekül durch die allgemeine Formel

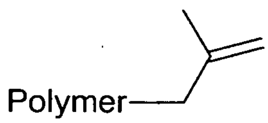

beschrieben wird, d.h. die Doppelbindung befindet sich in der Polymerkette in $\alpha$-Stellung. "Polymer" steht für den um eine Isobuteneinheit verkürzten Polyisobutenrest. Die Vinylidengruppen zeigen die höchste Reaktivität, wohingegen eine weiter im Inneren der Makromoleküle liegende Doppelbindung keine oder auf jeden Fall geringere Reaktivität bei Funktionalisierungsreaktionen zeigt. Hochreaktive Polyisobutene werden unter anderem als Zwischenprodukte zur Herstellung von Additiven für Schmier- und Kraftstoffe verwendet, wie dies beispielsweise in DE-A 27 02 604 beschrieben wird.

Derartige hochreaktive Polyisobutene sind z. B. nach dem Verfahren der DE-A 27 02 604 durch kationische Polymerisation von Isobuten in flüssiger Phase in Gegenwart von Bortrifluorid als Katalysator erhältlich. Nachteilig hierbei ist, dass die dabei erhaltenen Polyisobutene eine relativ hohe Polydispersität aufweisen. Die Polydispersität PDI ist ein Maß für die Molekulargewichtsverteilung der erhaltenen Polymerketten und entspricht dem Quotient aus gewichtsmittlerem Molekulargewicht $M_w$ und zahlenmittlerem Molekulargewicht $M_n$ (PDI = $M_w/M_n$).

Polyisobutene mit einem ähnlich hohen Anteil an endständigen Doppelbindungen, jedoch mit einer engeren Molekulargewichtsverteilung sind beispielsweise nach dem Verfahren der EP-A 145 235, US 5 408 018 sowie WO 99/64482 erhältlich, wobei die Polymerisation in Gegenwart eines desaktivierten Katalysators, zum Beispiel eines Komplexes aus Bortrifluorid, Alkoholen und/oder Ethern, erfolgt. Nachteilig hierbei ist, dass bei sehr tiefen Temperaturen, oftmals deutlich unterhalb von 0 C, was einen hohen Energieaufwand verursacht, gearbeitet werden muss, um tatsächlich zu hochreaktiven Polyisobutenen zu gelangen.

Die EP-A 1 344 785 beschreibt ein Verfahren zur Herstellung hochreaktiver Polyisobutene unter Verwendung eines solvensstabilisierten Übergangsmetallkomplexes mit schwach koordinierenden Anionen als Polymerisationskatalysator. Als geeignete Metalle werden solche der 3. bis 12. Gruppe des Periodensystems genannt; in den Beispielen werden Mangankomplexe eingesetzt. Zwar kann bei diesem Verfahren bei Reaktionstemperaturen oberhalb von 0 °C polymerisiert werden, nachteilig ist jedoch, dass die Polymerisationszeiten unakzeptabel lang sind, so dass eine wirtschaftliche Nutzung dieses Verfahrens unattraktiv wird.

Es ist bekannt, dass Katalysatorsysteme, wie sie beispielsweise in der EP-A 145 235, US 5 408 018 oder WO 99/64482 verwendet werden, zu einem gewissen Restfluorgehalt im Produkt in Form von organischen Fluorverbindungen führen. Um solche Nebenprodukte zu verringern oder ganz zu vermeiden, sollte auf Bortrifluorid-haltige Katalysatorkomplexe verzichtet werden.

Die WO 03/037940 offenbart Addukte aus Tri(pentafluorphenyl)boran oder Tri(pentafluorphenyl)aluminium und Carbonsäuren wie Octadecansäure als Initiatoren für die kationische Polymerisation von Isobuten.

T. S. Barbarich et al. beschreiben in den Artikeln Organometallics 1996, 15, S. 3776-3778, und Journal of Molecular Catalysis A: Chemical 128 (1998), S. 289-331, Lithium- und Thallium-tetrakis(polyfluoroalkoxy)borate und -aluminate mit den schwach koordinierenden Anionen $B(OCH(CF_3)_2)_4^-$, $Al(OCH(CF_3)_2)_4^-$, $Al(OC(CH_3)(CF_3)_2)_4^-$ und $Al(OC(Ph)(CF_3)_2)_4^-$. Diese Tetrakis(polyfluoroalkoxy)borate und -aluminate werden als unter anderem generell für die metallocen-katalysierte Olefinpolymerisation geeignete Katalysatoren empfohlen.

In der DE-A 103 56 768 werden Salze schwach koordinierender Anionen mit Bor-, Aluminium-, Gallium-, Indium-, Phosphor-, Arsen- oder Antimon-Zentralatomen, welche Fluor- und Alkoxylat-Reste enthalten, deren Herstellung und deren Verwendung unter anderem in der homogenen Katalyse, beispielsweise in der Olefin-Polymerisation, beschrieben. Als Gegenionen dienen ein- oder zweiwertige Kationen, beispielsweise Silberionen, Tetrabutylammoniumionen oder aus fluorierten Methan-Abkömmlingen erzeugte Kationen.

I.Krossing et al beschreiben in dem Artikel European Journal of Inorganic Chemistry, 2005, S 1979-1989, protonensaure Verbindungen [ H(L) ] [ $Al(OC(CF_3)_4)$ ]. Diese Verbindungen werden jedoch nur generell als "attractive reagent for synthesis , particularly in organometallic chemistry and homogeneous catalysis" empfohlen.

Beispiel 2 von JP-A-2005-272524 offenbart die Copolymerisation von N-substitutierten Maleimiden mit Isobuten in Gegenwart von Trifluoroboranacetat. Das Molekulargewicht des erhaltenen Copolymer ist 170.

Aufgabe der vorliegenden Erfindung war es daher, ein Verfahren zur Herstellung von nieder-, mittel- und hochmolekularen hochreaktiven Polyisobutenhomo- oder -copolymeren bereitzustellen, insbesondere zur Herstellung von Polyisobutenpolymeren mit einem zahlenmittleren Molekulargewicht $M_n$ von 500 bis 1.000.000 und mit einem Gehalt an endständigen Vinyliden-Doppelbindungen von wenigstens 80 Mol-%, welches einerseits eine Polymerisation von Isobuten oder Isobuten-haltigen Monomerenquellen bei nicht allzu tiefen Temperatur erlaubt, gleichzeitig jedoch deutlich kürzere Polymerisationszeiten ermöglicht. Der hierbei verwendete Katalysator sollte keine leicht abspaltbaren Fluorfunktionen enthalten.

Die Aufgabe wurde gelöst durch ein Verfahren zur Herstellung von hochreaktiven Isobutenhomo- oder -copolymeren mit einem zahlenmittleren Molekulargewicht $M_n$ von 500 bis 1.000.000 durch Polymerisation von Isobuten oder eines Isobuten-haltigen Monomergemisches in flüssiger Phase in Gegenwart eines gelösten, dispergierten oder geträgerten metallhaltigen Katalysatorkomplexes, **dadurch gekennzeichnet, dass** man als Katalysatorkomplex eine Verbindung der allgemeinen Formel I

$$Z^{n+}\ [MX_a(OR)_b]_n^{-} \bullet L_x \qquad (I)$$

in der

M ein Metallatom aus der Gruppe Bor, Aluminium, Gallium, Indium und Thallium bedeutet,

die Variablen R unabhängig voneinander für aliphatische, heterocyclische oder aromatische Kohlenwasserstoffreste mit jeweils 1 bis 18 Kohlenstoffatomen, welche Fluoratome enthalten können, oder für $C_1$- bis $C_{18}$-Kohlenwasserstoffreste enthaltende Silylgruppen stehen,

die Variable X ein Halogenatom, einen Pseudohalogenid-Rest oder eine CarboxylatGruppe bedeutet,

Z ein Proton (n=1), gegebenenfalls substituiertes Ammonium (n=1) oder ein n-wertiges Metallkation bezeichnet,

L neutrale Solvensmoleküle bezeichnet,

a für ganze Zahlen von 0 bis 3 und b für ganze Zahlen von 1 bis 4 steht, wobei die Summe aus a + b den Wert 4 ergeben muß, und

x eine Zahl $\geq 0$ bezeichnet,

einsetzt.

Unter Isobutenhomopolymeren versteht man im Rahmen der vorliegenden Erfindung solche Polymere, die bezogen auf das Polymer zu wenigstens 98 Mol-%, vorzugsweise zu wenigstens 99 Mol-% aus Isobuten aufgebaut sind. Dementsprechend versteht man unter Isobutencopolymeren solche Polymere, die mehr als 2 Mol-% Monomere einpolymerisiert enthalten, die von Isobuten verschieden sind.

Stehen die Variablen R für aliphatische, heterocyclische oder aromatische Kohlenwasserstoffreste mit jeweils 1 bis 18 Kohlenstoffatomen, enthalten sie vorzugsweise ein oder mehrere Fluoratome.

Die Variablen R stehen im Falle von Fluorkohlenwasserstoffresten unabhängig voneinander für aliphatische, heterocyclische oder aromatische fluorhaltige Kohlenwasserstoffreste mit jeweils 1 bis 18, vorzugsweise 1 bis 13 Kohlenstoffatomen. Im Falle von aliphatischen Resten werden solche mit 1 bis 10, insbesondere 1 bis 6 Kohlenstoffatomen besonders bevorzugt. Diese aliphatischen Reste können linear, verzweigt oder cyclisch sein. Sie enthalten jeweils 1 bis 12, insbesondere 3 bis 9 Fluoratome. Typische Beispiele für derartige aliphatische Reste sind Difluormethyl, Trifluormethyl, 2,2-Difluorethyl, 2,2,2-Trifluorethyl, 1,2,2,2-Tetrafluorethyl, Pentafluorethyl, 1,1,1-Trifluor-2-propyl, 1,1,1-Trifluor-2-butyl, 1,1,1-Trifluor-tert.-butyl und insbesondere Tris(trifluor-methyl)methyl.

Im Falle von aromatischen Resten stehen die Variablen R unabhängig voneinander vorzugsweise für $C_6$- bis $C_{18}$-Arylreste, insbesondere $C_6$- bis $C_9$-Arylreste, mit jeweils 3 bis 12 Fluoratomen, insbesondere 3 bis 6 Fluoratomen;

hierbei werden Pentafluorphenylreste, 3- oder 4-(Trifluormethyl)phenylreste und 3,5-Bis(trifluormethyl)phenylreste bevorzugt.

Derartiges $C_6$- bis $C_{18}$-Aryl bzw. $C_6$- bis $C_9$-Aryl steht im Rahmen der vorliegenden Erfindung für gegebenenfalls weiter substituiertes Polyfluorphenyl oder Polyfluortolyl, gegebenenfalls weiter substituiertes Polyfluornaphthyl, gegebenenfalls weiter substituiertes Polyfluorbiphenyl, gegebenenfalls weiter substituiertes Polyfluoranthracenyl oder gegebenenfalls weiter substituiertes Polyfluorphenanthrenyl. Beispiel für weitere Substituenten, die ein- oder mehrfach vorhanden sein können, sind hierbei beispielsweise Nitro, Cyano, Hydroxy, Chlor und Trichlormethyl. Die genannte Anzahl an Kohlenstoffatomen für diese Arylreste umfassen sämtliche in diesen Resten enthaltenen Kohlenstoffatome, einschließlich der Kohlenstoffatome von Substituenten an den Arylresten.

Im Falle von $C_1$- bis $C_{30}$-Kohlenwasserstoffreste enthaltenden Silylgruppen stehen die Variablen R unabhängig voneinander vorzugsweise für Trialkylsilylgruppe, wobei die drei Alkylreste verschieden oder vorzugsweise gleich sein können. Als Alkylreste kommen hier vor allem lineare oder verzweigte Alkylreste mit 1 bis 8 Kohlenstoffatomen in Betracht. Beispiele hierfür sind Methyl, Ethyl, n-Propyl, Isopropyl, n-Butyl, 2-Butyl, Isobutyl, tert.-Butyl, Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl und 2-Ethylhexyl. Jedoch sind auch längerkettige Alkylreste wie n-Decyl, n-Dodecyl, n-Tridecyl, Isotridecyl, n-Tetra-decyl, n-Hexadecyl oder n-Octadecyl prinzipiell verwendbar. Besonders gut eignen sich Trimethylsilyl- und Triethylsilylreste.

Die Variablen R können in geringem Umfang zusätzlich funktionelle Gruppen oder Heteroatome enthalten, soweit dies den dominierenden Fluorkohlenwasserstoff-Charakter bzw. den dominierenden Silylkohlenwasserstoff-Charakter der Reste nicht beeinträchtigt. Derartige funktionelle Gruppen oder Heteroatome sind beispielsweise weitere Halogenatome wie Chlor oder Brom, Nitrogruppen, Cyanogruppen, Hydroxygruppen sowie $C_1$- bis $C_4$-Alkoxygruppen wie Methoxy, Ethoxy, Propoxy, Isopropoxy, Butoxy, Isobutoxy und tert.-Butoxy. Heteroatome können aber auch Bestandteil der zugrundeliegenden Kohlenwasserstoffketten oder -ringe sein, beispielsweise Sauerstoff in Form von Etherfunktionen, z. B. in Polyoxyalkylenketten, oder Stickstoff und/oder Sauerstoff als Bestandteil von heterocyclischen aromatischen oder teil- oder vollgestättigten Ringsystemen, z. B. in Pyridinen, Imidazolen, Imidazolinen, Piperidinen oder Morpholinen.

In einer bevorzugten Ausführungsform stehen die Variablen R unabhängig voneinander für $C_1$- bis $C_{21}$-Alkylreste mit 1 bis 12 Fluoratomen, insbesondere für Tris(trifluormethyl)methylreste, oder $C_6$- bis $C_{18}$-Arylreste mit 3 bis 6 Fluoratomen, insbesondere für Pentafluorphenylreste, 3- oder 4-(Trifluormethyl)phenylreste oder 3,5-Bis(trifluormethyl) phenylreste, stehen.

Sollte mehrere Variablen R in der Verbindung I vorliegen, können diese alle unterschiedlich sein. Eine oder mehrere Variablen R können auch reine Kohlenwasserstoffreste sein, wobei mindestens eine Variable R ein aliphatischer oder aromatischer Kohlenwasserstoffrest mit 1 bis 18 Kohlenstoffatomen, welcher Fluoratome enthält, oder eine $C_1$- bis $C_{18}$-Kohlenwasserstoffreste enthaltende Silylgruppe sein sollte. Es können aber auch mehrere oder alle dieser Variablen gleich sein. In einer besonders bevorzugten Ausführungsform sind alle Variablen R gleich und stehen für aliphatische oder aromatische Kohlenwasserstoffreste mit jeweils 1 bis 18 Kohlenstoffatomen, welche Fluoratome enthalten, oder für $C_1$- bis $C_{18}$-Kohlenwasserstoffreste enthaltende Silylgruppen, insbesondere jeweils für Tris(trifluormethyl) methylreste, Pentafluorphenylreste, 3- oder 4-(Trifluor-methyl)phenylreste oder 3,5-Bis(trifluormethyl)phenylreste.

Die Variablen R sind Bestandteil von entsprechenden Alkoxylat-Einheiten -OR, die zusammen mit möglichen Halogenatomen X als Substituenten am Metallatom M lokalisiert und in der Regel mit diesem durch kovalente Bindung verknüpft sind. Die Anzahl b dieser Alkoxylat-Einheiten -OR beträgt vorzugsweise 2 bis 4, insbesondere 4, und die Anzahl a der möglichen Halogenatome X beträgt vorzugsweise 0 bis 2, insbesondere 0, wobei die Summe aus a + b den Wert 4 ergeben muß.

Bei den Metallatomen M handelt es sich um die Metalle der Gruppe IIIA (entsprechend Gruppe 13 in der neuen Bezeichnungsweise) des Periodensystems der Elemente. Hiervon werden Bor und Aluminium, insbesondere Aluminium, bevorzugt.

Bei den Halogenatomen X handelt es sich um die Nichtmetalle der Gruppe VIIA (entsprechend Gruppe 17 in der neuen Bezeichnungsweise) des Periodensystems der Elemente, also um Fluor, Chlor, Brom, Iod und Astat. Hiervon werden Fluor und insbesonder Chlor bevorzugt.

Steht die Variable X für einen Pseudohalogenid-Rest, bezeichnet sie insbesondere Cyanid, Cyanat, Thiocyanat (Rhodanid) oder Isocyanat.

Die Variable Z steht vorzugsweise für ein Proton ($H^+$), kann normalerweise aber auch Ammonium ($NH_4^+$), ein substituiertes Ammoniumion, beispielsweise Methylammonium, Dimethylammonium, Trimethylammonium oder Tetramethylammonium, oder ein ein-, zwei- oder dreiwertiges Metallkation, beispielsweise $Li^+$, $Na^+$, $K^+$, $Mg^{2+}$, $Ca^{2+}$, $Al^{3+}$, $Fe^{2+}$, $Fe^{3+}$,$Co^{2+}$, $Ni^{2+}$, $Cu^+$, $Cu^{2+}$, $Ag^+$ oder $Zn^{2+}$, bezeichnen. Die Ladungszahl n ist somit vorzugsweise 1, 2 oder 3.

In den Verbindungen der allgemeinen Formel I können auch neutrale Solvensmoleküle L enthalten sein. Diese

Solvensmoleküle L können auch als Liganden oder Donoren bezeichnet werden. Pro Formeleinheit I können üblicherweise bis x = 12 solcher Solvensmoleküle L, insbesondere x = 2 bis 8, vorliegen. Vorzugsweise werden sie ausgewählt sind aus offenkettigen und cyclischen Ethern, insbesondere aus Di-$C_1$- bis $C_3$-alkylethern, Ketonen, Thiolen, organischen Sulfiden, Sulfonen, Sulfoxiden, Sulfonsäureestern, organischen Sulfaten, Phosphanen, Phosphanoxiden, organischen Phosphiten, organischen Phosphaten, Phosphorsäureamiden, Carbonsäureestern, Carbonsäureamiden sowie Alkylnitrilen und Arylnitrilen.

Die Solvensmoleküle L stehen für Lösungsmittelmoleküle, die mit den zentralen Metallatomen koordinative Bindungen ausbilden können. Hierbei handelt es sich um Moleküle, die üblicherweise als Lösungsmittel eingesetzt werden, gleichzeitig aber über wenigstens eine dative Gruppierung, z.B. über ein freies Elektronenpaar, verfügen, die eine koordinative Bindung zum einem Zentralmetall eingehen kann. Bevorzugte Solvensmoleküle L sind solche, die einerseits koordinativ an das Zentralmetall binden, andererseits jedoch keine starken Lewisbasen darstellen, so dass sie im Verlauf der Polymerisation aus der Koordinationssphäre des Zentralmetalls leicht verdrängt werden können.

Die Solvensmoleküle L haben unter anderem auch die Funktion, die in den Verbindungen I möglicherweise enthaltenen Protonen zu stabilisieren, beispielsweise im Falle von Ethern als Diethyletherate $[H(OEt_2)_2]^+$.

Beispiele für offenkettige und cyclische Ether für Solvensmoleküle L sind Diethylether, Dipropylether, Diisopropylether, Methyl-tert.-butylether, Ethyl-tert.-butylether, Tetrahydrofuran und Dioxan. Im Falle von offenkettigen Ethern werden Di-$C_1$- bis $C_3$-alkylether, insbesondere symmetrische Di-$C_1$- bis $C_3$-alkylether, bevorzugt.

Geeignete Ketone für Solvensmoleküle L sind beispielsweise Aceton, Ethylmethylketon, Acetoaceton oder Acetophenon.

Geeignete Thiole, organische Sulfide (Thioether), Sulfone, Sulfoxide, Sulfonsäureester und organische Sulfate für schwefelhaltige Solvensmoleküle L sind beispielsweise längerkettige Mercaptane wie Dodecylmercaptan, Dialkylsulfide, Dialkyldisulfide, Dimethylsulfon, Dimethylsulfoxid, Methylsulfonsäuremethylester oder Dialkylsulfate wie Dimethylsulfat.

Geeignete Phosphane, Phosphanoxide, organische Phosphite, organische Phosphate und Phosphorsäureamide für phosphorhaltige Solvensmoleküle L sind beispielsweise Triphenylphosphin, Triphenylphosphanoxid, Trialkyl-, Triaryl- oder gemischte Aryl/Alkylphosphite, Trialkyl-, Triaryl- oder gemischte Aryl/Alkylphosphate oder Hexamethylphosphorsäuretriamid.

Geeignete Carbonsäureester für Solvensmoleküle L sind beispielsweise Essigsäuremethyl- oder -ethylester, Propionsäuremethyl- oder -ethylester, Buttersäuremethyl- oder -ethylester, Capronsäuremethyl- oder -ethylester oder Benzoesäuremethyl- oder - ethylester.

Geeignete Carbonsäureamide für Solvensmoleküle L sind beispielsweise Formamid, Dimethylformamid, Acetamid, Dimethylacetamid, Propionamid, Benzamid oder N,N-Dimethylbenzamid.

Geeignete Alkylnitrile und Arylnitrile für Solvensmoleküle L sind insbesondere $C_1$- bis $C_8$-Alkylnitrile, vor allem $C_1$- bis $C_4$-Alkylnitrile, beispielsweise Acetonitril, Propionitril, Butyronitril oder Pentylnitril, sowie Benzonitril.

Bevorzugt stehen in den protonensauren Verbindungen der allgemeinen Formel I alle L für das gleiche Solvensmolekül.

Die Verbindungen der allgemeinen Formel I können in situ erzeugt und in dieser Form als Katalysatoren für die Isobuten-Polymerisation eingesetzt werden. Sie können aber auch aus ihren präparativ gut zugänglichen Salzen als Reinsubstanzen hergestellt und erfindungsgemäß eingesetzt werden. Sie sind in dieser Form in der Regel über einen längeren Zeitraum lagerstabil.

Zur Präparation der Verbindungen I kann beispielsweise ein vierfacher Überschuß eines Alkohols der Formel ROH mit Lithiumaluminiumhydrid in einem aprotischen Lösungsmittel zum entsprechenden Lithiumsalz umgesetzt werden. Das erhaltene Lithiumsalz kann in einem nachfolgenden Schritt mit Halogenwasserstoff versetzt werden, um unter Eliminierung von Lithiumhalogenid die Verbindung I zu ergeben.

Das erfindungsgemäße Polymerisationsverfahren eignet sich zur Herstellung von nieder-, mittel- und hochmolekularen hochreaktiven Isobutenhomo- oder -copolymeren. Bevorzugte Comonomere sind hierbei Styrol, Styrolderivate wie insbesondere $\alpha$-Methylstyrol und 4-Methylstyrol, Styrol- und Styrolderivate-haltige Monomerengemische, Alkadiene wie Butadien und Isopren sowie Gemische davon. Insbesondere setzt man in das erfindungsgemäße Polymerisationsverfahren Isobuten, Styrol oder Gemische davon als Monomere ein.

Für den Einsatz von Isobuten oder einem Isobuten-haltigen Monomerengemisch als zu polymerisierendem Monomer eignet sich als Isobuten-Quelle sowohl Isobuten selbst als auch Isobuten-haltige $C_4$-Kohlenwasserstoffströme, beispielsweise $C_4$-Raffinate, $C_4$-Schnitte aus der Isobutan-Dehydrierung, $C_4$-Schnitte aus Steamcrackern und aus FCC-Crackern (fluid catalysed cracking), sofern sie weitgehend von darin enthaltenem 1,3-Butadien befreit sind. Geeignete $C_4$-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den $C_4$-Kohlenwasserstoffströmen im Bereich von 40 bis 60 Gew.-%. Das Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser

Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden soll; enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht Vinylaromaten wie Styrol und $\alpha$-Methylstyrol, $C_1$-$C_4$-Alkylstyrole wie 2-, 3- und 4-Methylstyrol sowie 4-tert.-Butylstyrol, Alkadiene wie Butadien und Isopren sowie Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen, wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(meth-oxyethoxy)silyl]-2-methylpropen-2, sowie Vinylether wie tert.-Butylvinylether.

Sollen mit dem erfindungsgemäßen Verfahren Copolymere hergestellt werden, so kann das Verfahren so ausgestaltet werden, dass bevorzugt statistische Polymere oder bevorzugt Blockcoplymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- als auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polyisobutenblock. Dies ist darauf zurückzuführen, dass die vinylaromatische Verbindung, speziell Styrol, signifikant schneller polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von Lewissäure-Katalysatoren in flüssiger Phase durchgeführt werden.

Das erfindungsgemäße Verfahren ist sowohl für eine Durchführung bei niedrigen Temperaturen, z.B. bei -78 bis 0 °C, als auch bei höheren Temperaturen, d.h. bei wenigstens 0 °C, z.B. bei 0 bis 100 °C, geeignet. Die Polymerisation wird vor allem aus wirtschaftlichen Gründen vorzugsweise bei wenigstens 0 °C, z.B. bei 0 bis 100 °C, besonders bevorzugt bei 20 bis 60 °C durchgeführt, um den Energie- und Materialverbrauch, der für eine Kühlung erforderlich ist, möglichst gering zu halten. Sie kann jedoch genauso gut bei niedrigeren Temperaturen, z.B. bei -78 bis <0 °C, vorzugsweise bei -40 bis -10 °C, durchgeführt werden.

Erfolgt die Polymerisation bei oder oberhalb der Siedetemperatur des zu polymerisierende Monomers oder Monomerengemischs, so wird sie vorzugsweise in Druckgefäßen, beispielsweise in Autoklaven oder in Druckreaktoren, durchgeführt.

Vorzugsweise wird die Polymerisation in Gegenwart eines inerten Verdünnungsmittels durchgeführt. Das verwendete inerte Verdünnungsmittel sollte geeignet sein, die während der Polymerisationsreaktion in der Regel auftretende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise aliphatische Kohlenwasserstoffe wie Butan, Pentan, Hexan, Heptan, Octan und Isooctan, cycloaliphatische Kohlenwasserstoffe, wie Cyclopentan und Cyclohexan, aromatische Kohlenwasserstoffe, wie Benzol, Toluol und die Xylole, und halogenierte Kohlenwasserstoffe wie Methylchlorid, Dichlormethan und Trichlormethan, sowie Mischungen der vorgenannten Verdünnungsmittel. Bevorzugt verwendet man wenigstens einen halogenierten Kohlenwasserstoff, gegebenenfalls im Gemisch mit wenigstens einem der vorstehend genannten aliphatischen oder aromatischen Kohlenwasserstoffe. Insbesondere verwendet man Dichlormethan. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien wie Aktivkohle, Molekularsiebe oder Ionenaustauscher.

Vorzugsweise wird die Polymerisation unter weitgehend aprotischen, insbesondere unter wasserfreien Reaktionsbedingungen durchgeführt. Unter aprotischen beziehungsweise wasserfreien Reaktionsbedingungen versteht man, dass der Wassergehalt (bzw. der Gehalt an protischen Verunreinigungen) im Reaktionsgemisch weniger als 50 ppm und insbesondere weniger als 5 ppm beträgt. In der Regel wird man daher die Einsatzstoffe vor ihrer Verwendung durch physikalische und/oder durch chemische Maßnahmen trocknen. Insbesondere hat es sich bewährt, die als Lösungsmittel eingesetzten aliphatischen oder alicyclischen Kohlenwasserstoffe nach üblicher Vorreinigung und Vortrocknung mit

einer metallorganischen Verbindung, beispielsweise einer Organolithium-, Organomagnesium- oder Organoaluminium-Verbindung, in einer Menge zu versetzen, die ausreicht, um die Wasserspuren aus dem Lösungsmittel zu entfernen. Das so behandelte Lösungsmittel wird dann vorzugsweise direkt in das Reaktionsgefäß einkondensiert. In ähnlicher Weise kann man auch mit den zu polymerisierenden Monomeren, insbesondere mit Isobuten oder mit den Isobuten-haltigen Mischungen verfahren. Auch die Trocknung mit anderen üblichen Trockenmitteln wie Molekularsieben oder vorgetrockneten Oxiden wie Aluminiumoxid, Siliciumdioxid, Calciumoxid oder Bariumoxid, ist geeignet. Die halogenierten Lösungsmittel, für die eine Trocknung mit Metallen wie Natrium oder Kalium oder mit Metallalkylen nicht in Betracht kommt, werden mit dafür geeigneten Trocknungsmitteln, beispielsweise mit Calciumchlorid, Phosphorpentoxid oder Molekularsieb, von Wasser(spuren) befreit. In analoger Weise kann man auch diejenigen Einsatzstoffe trocknen, für die eine Behandlung mit Metallalkylen ebenfalls nicht in Betracht kommt, beispielsweise vinylaromatische Verbindungen.

Die Polymerisation des Isobutens bzw. des isobutenhaltigen Einsatzmaterials erfolgt in der Regel spontan beim Inkontaktbringen des metallhaltigen Katalysatorkomplexes (d.h. der Verbindung I) mit dem Monomer bei der gewünschten Reaktionstemperatur. Hierbei kann man so vorgehen, dass man das Monomer gegebenenfalls im Lösungsmittel vorlegt, auf Reaktionstemperatur bringt und anschließend den metallhaltigen Katalysatorkomplex, beispielsweise als lose Schüttung, zugibt. Man kann auch so vorgehen, dass man den metallhaltigen Katalysatorkomplex (beispielsweise als lose Schüttung oder als Festbett) gegebenenfalls im Lösungsmittel vorlegt und anschließend das Monomer zugibt. Als Polymerisationsbeginn gilt dann derjenige Zeitpunkt, zu dem alle Reaktanden im Reaktionsgefäß enthalten sind. Der metallhaltige Katalysatorkomplex kann sich teilweise oder vollständig im Reaktionsmedium lösen oder als Dispersion vorliegen. Alternativ kann der Katalysatorkomplex auch in geträgerter Form eingesetzt werden.

Soll der metallhaltige Katalysatorkomplex in geträgerter Form eingesetzt werden, wird er mit einem geeigneten Trägermaterial in Kontakt gebracht und somit in eine heterogenisierte Form überführt. Das Inkontaktbringen erfolgt beispielsweise durch Imprägnieren, Tränken, Besprühen, Bepinseln oder verwandete Techniken. Das Inkontaktbringen umfasst auch Techniken der Physisorption. Das Inkontaktbringen kann bei Normaltemperatur und Normaldruck oder auch bei höheren Temperaturen und/oder Drücken erfolgen.

Durch das Inkontaktbringen geht der metallhaltige Katalysatorkomplex mit dem Trägermaterial eine physikalische und/oder chemische Wechselwirkung ein. Derartige Wechselwirkungsmechanismen sind zum einen der Austausch von einem oder mehreren neutralen Solvensmolekülen L und/oder von einer oder mehrerer geladener Struktureinheiten des metallhaltigen Katalysatorkomplexes gegen neutrale bzw. entsprechend geladene Gruppierungen, Moleküle oder Ionen, welche im Trägermater eingebaut sind oder auf ihm haften. Weiterhin kann das Anion des metallhaltigen Katalysatorkomplexes gegen eine entsprechende negativ geladene Gruppierung oder ein Anion aus dem Trägermaterial oder das positiv geladene Kation bzw. Proton aus dem metallhaltigen Katalysatorkomplex gegen ein entsprechend positiv geladenes (anderes) Kation aus dem Trägermaterial (beispielsweise ein Alkalimetallion) ausgetauscht werden. Neben solchen echten Ionenaustauschvorgängen oder anstelle dieser können auch schwächere elektrostatische Wechselwirkung auftreten. Schließlich kann der metallhaltige Katalysatorkomplex auch mittels kovalenter Bindungen an das Trägermaterial fixiert werden, beispielsweise durch Reaktion mit Hydroxylgruppen oder Silanolgruppen, die im Inneren des Trägermaterials oder vorzugsweise auf der Oberfläche sitzen.

Wesentlich für die Eignung als Trägermaterial im Rahmen der vorliegenden Erfindung sind auch seine spezifische Oberflächegröße und seine Porositätseigenschaften. Hierbei haben sich mesoporöse Trägermaterialien als besonders vorteilhaft herausgestellt. Mesoporöse Trägermaterialien haben in der Regel ein innere Oberfläche von 100 bis 3000 $m^2/g$, insbesondere 200 bis 2500 $m^2/g$, und Porendurchmesser von 0,5 bis 50 nm, insbesondere von 1 bis 20 nm.

Als Trägermaterial eignen sich prinzipiell alle festen inerten Substanzen mit großer Oberfläche, die üblicherweise als Unterlage oder Gerüst für Wirkstoff, insbesondere für Katalysatoren, dienen können. Typische anorganische Stoffklassen für solche Trägermaterialien sind Aktivkohle, Tonerde, Kieselgel, Kieselgur, Talk, Kaolin, Tone und Silikate. Typische organische Stoffklassen für solche Trägermaterialien sind vernetzte Polymermatrices wie vernetzte Polystyrole und vernetzte Polymethacrylate, Phenol-Formaldehyd-Harze oder Polyalkylamin-Harze.

Vorzugsweise ist das Trägermaterial aus Molekularsieben und Ionenaustauschern ausgewählt.

Als Ionenaustauscher können sowohl Kationen-, Anionen- als auch amphotere Ionenaustauscher verwendet werden. Bevorzugte organische oder anorganische Matrices-Typen für derartige Ionenaustauscher sind hierbei mit Divinylbenzol benetzte Polystyrole (vernetzte Divinylbenzol-Styrol-Copolymerisate), mit Divinylbenzol vernetzte Polymethacrylate, Phenol-Formaldehyd-Harze, Polyalkylamin-Harze, hydrophilisierte Cellulose, vernetztes Dextran, vernetzte Agarose, Zeolithe, Montmorillonite, Attapulgite, Bentonite, Aluminiumsilikate und saure Salze polyvalenter Metallionen wie Zirconiumphosphat, Titanwolframat oder Nickelhexacyanoferrat(II). Saure Ionenaustauscher tragen üblicherweise Carbonsäure-, Phosphonsäure-, Sulfonsäure-, Carboxymethyl- oder Sulfoethyl-Gruppen. Basische Ionenaustauscher enthalten meistens primäre, sekundäre oder tertiäre Aminogruppen, quartäre Ammoniumgruppen, Aminoethyl- oder Diethylaminoethyl-Gruppen.

Molekularsiebe haben ein starkes Adsorptionsvermögen für Gase, Dämpfe und gelöste Stoffe und sind generell auch für Ionenaustauschvorgänge einsetzbar. Molekularsiebe haben in der Regel einheitliche Porendurchmesser, die in der Größenordnung der Durchmesser von Molekülen liegen, und große innere Oberflächen, typischerweise 600 bis

700 $m^2$/g. Als Molekularsiebe im Rahmen der vorliegenden Erfindung können insbesondere Silikate, Aluminiumsilikate, Zeolithe, Silicoalumophosphate und/oder Kohlenstoff-Molekularsiebe verwendet werden.

Ionenaustauscher und Molekularsiebe mit einer inneren Oberfläche von 100 bis 3000 $m^2$/g, insbesondere 200 bis 2500 $m^2$/g, und Porendurchmessern von 0,5 bis 50 nm, insbesondere von 1 bis 20 nm, sind besonders vorteilhaft.

Vorzugsweise ist das Trägermaterial aus Molekularsieben der Typen H-AIMCM-41, H-AIMCM-48, NaAIMCM-41 und NaAIMCM-48 ausgewählt. Diese Molekularsieb-Typen stellen Silikate oder Aluminiumsilikate dar, auf deren innerer Oberfläche Silanolgruppen haften, die für die Wechselwirkung mit den Katalysatorkomplex von Bedeutung sein können. Die Wechselwirkung beruht vermutlich jedoch hauptsächlich auf dem teilweisen Austausch von Protonen und/oder Natriumionen.

Sowohl beim Einsatz als Lösung, als Dispersion oder in geträgerter Form wird der als Polymerisationskatalysator wirksame metallhaltige Katalysatorkomplex in solch einer Menge eingesetzt, dass er, bezogen auf die Mengen an eingesetzten Monomeren, in einem molaren Verhältnis von vorzugsweise 1:10 bis 1:1.000.0000, vor allem von 1:10.000 bis 1:500.000 und insbesondere von 1:5000 bis 1:100.000 im Polymerisationsmedium vorliegt.

Die Konzentration ("Beladung") des metallhaltigen Katalysatorkomplexes im Trägermaterial liegt im Bereich von vorzugsweise 0,005 bis 20 Gew.-%, vor allem 0,01 bis 10 Gew.-% und insbesondere 0,1 bis 5 Gew.-%.

Der als Polymerisationskatalysator wirksame metallhaltige Katalysatorkomplex liegt im Polymerisationsmedium beispielsweise als lose Schüttung, als Wirbelbett, als Flüssigbett oder als Festbett vor. Geeignete Reaktortypen für das erfindungsgemäße Polymerisationsverfahren sind demgemäß üblicherweise Rührkesselreaktoren, Schlaufenreaktoren, Rohrreaktoren, Wirbelbettreaktoren, Wirbelschichtreaktoren, Rührtankreaktoren mit und ohne Lösungsmittel, Flüssigbettreaktoren, kontinuierliche Festbettreaktoren und diskontinuierliche Festbettreaktoren (batch-Fahrweise).

Zur Herstellung von Copolymeren kann man so vorgehen, dass man die Monomere, gegebenenfalls im Lösungsmittel, vorlegt und anschließend den metallhaltigen Katalysatorkomplex, beispielsweise als lose Schüttung, zugibt. Die Einstellung der Reaktionstemperatur kann vor oder nach der Zugabe des metallhaltigen Katalysatorkomplexes erfolgen. Man kann auch so vorgehen, dass man zunächst nur eines der Monomere, gegebenenfalls im Lösungsmittel, vorlegt, an schließend den metallhaltigen Katalysatorkomplex zugibt und erst nach einer gewissen Zeit, beispielsweise wenn wenigstens 60%, wenigstens 80% oder wenigstens 90% des Monomers umgesetzt sind, das oder die weiteren Monomere zugibt. Alternativ kann man den metallhaltigen Katalysatorkomplex, beispielsweise als lose Schüttung, gegebenenfalls im Lösungsmittel, vorlegen, anschließend die Monomere gleichzeitig oder nacheinander zugeben und dann die gewünschte Reaktionstemperatur einstellen. Als Polymerisationsbeginn gilt dann derjenige Zeitpunkt, zu dem der metallhaltigen Katalysatorkomplex und wenigstens eines der Monomere im Reaktionsgefäß enthalten sind.

Neben der hier beschriebenen diskontinuierlichen Vorgehensweise kann man die Polymerisation auch als kontinuierliches Verfahren ausgestalten. Hierbei führt man die Einsatzstoffe, d.h. das oder die zu polymerisierenden Monomere, gegebenenfalls das Lösungsmittel sowie gegebenenfalls den metallhaltigen Katalysatorkomplex (beispielsweise als lose Schüttung) der Polymerisationsreaktion kontinuierlich zu und entnimmt kontinuierlich Reaktionsprodukt, so dass sich im Reaktor mehr oder weniger stationäre Polymerisationsbedingungen einstellen. Das oder die zu polymerisierenden Monomere können als solche, verdünnt mit einem Lösungsmittel oder als monomerhaltiger Kohlenwasserstoffstrom, zugeführt werden.

Zum Reaktionsabbruch wird das Reaktionsgemisch vorzugsweise desaktiviert, beispielsweise durch Zugabe einer protischen Verbindung, insbesondere durch Zugabe von Wasser, Alkoholen, wie Methanol, Ethanol, n-Propanol und Isopropanol oder deren Gemische mit Wasser, oder durch Zugabe einer wässrigen Base, z.B. einer wässrigen Lösung eines Alkali- oder Erdalkalihydroxids wie Natriumhydroxid, Kaliumhydroxid, Magnesiumhydroxid oder Calciumhydroxid, eines Alkali- oder Erdalkalicarbonats wie Natrium-, Kalium-, Magnesium- oder Calciumcarbonat, oder eines Alkali- oder Erdalkalihydrogencarbonats wie Natrium-, Kalium-, Magnesium- oder Calciumhydrogencarbonat.

In einer bevorzugten Ausführungsform der Erfindung dient das erfindungsgemäße Verfahren zur Herstellung von hochreaktiven Isobutenhomo- oder -copolymeren mit einem Gehalt an terminalen Vinyliden-Doppelbindungen ($\alpha$-Doppelbindungen) von wenigstens 80 Mol-%, vorzugsweise von wenigstens 85 Mol-%, besonders bevorzugt von wenigstens 90 Mol-% und insbesondere von wenigstens 95 Mol-%, z.B. von etwa 100 Mol-%. Insbesondere dient es zur Herstellung von hochreaktiven Copolymeren, die aufgebaut sind aus Monomeren umfassend Isobuten und wenigstens eine vinylaromatische Verbindung und einem Gehalt an terminalen Vinyliden-Doppelbindungen ($\alpha$-Doppelbindungen) von wenigstens 80 Mol-%, vorzugsweise von wenigstens 85 Mol-%, besonders bevorzugt von wenigstens 90 Mol-% und insbesondere von wenigstens 95 Mol-%, z.B. von etwa 100 Mol-%, aufweisen.

Bei der Copolymerisation von Isobuten oder Isobuten-haltigen Kohlenwasserstoffschnitten mit wenigstens einer vinylaromatischen Verbindung entstehen auch bei gleichzeitiger Zugabe der Comonomere vorzugsweise Blockcopolymere, wobei der Isobutenblock in der Regel den terminalen, d.h. den zuletzt gebildeten Block darstellt.

Dementsprechend dient das erfindungsgemäße Verfahren in einer bevorzugten Ausführungsform zur Herstellung von hochreaktiven Isobuten-Styrol-Copolymeren. Vorzugsweise weisen die hochreaktiven Isobuten-Styrol-Copolymere einen Gehalt an terminalen Vinyliden-Doppelbindungen ($\alpha$-Doppelbindungen) von wenigstens 80 Mol-%, besonders bevorzugt von wenigstens 85 Mol-%, stärker bevorzugt von wenigstens 90 Mol-% und insbesondere von wenigstens

95 Mol-%, z.B. von etwa 100 Mol-%, auf.

Zur Herstellung solcher Copolymere wird Isobuten oder ein Isobuten-haltiger Kohlenwasserstoffschnitt mit wenigstens einer vinylaromatischen Verbindung, insbesondere Styrol, copolymerisiert. Besonders bevorzugt enthält ein solches Monomerengemisch 5 bis 95 Gew.-%, besonders bevorzugt 30 bis 70 Gew.-% Styrol.

Vorzugsweise weisen die mit dem erfindungsgemäßen Verfahren hergestellten hochreaktiven Isobutenhomo- oder -copolymere, speziell die Isobutenhomopolymere, eine Polydispersität (PDI = $M_w/M_n$) von 1,0 bis 3,0, vor allem von höchstens 2,0, vorzugsweise von 1,0 bis 2,0, besonders bevorzugt von 1,0 bis 1,8 und insbesondere von 1,0 bis 1,5 auf.

Vorzugsweise besitzen die mit dem erfindungsgemäßen Verfahren hergestellten hochreaktiven Isobutenhomo- oder -copolymere ein zahlenmittleres Molekulargewicht $M_n$ von 500 bis 1.000.000, besonders bevorzugt von 500 bis 50.000, stärker bevorzugt von 500 bis 5000 und insbesondere von 800 bis 2500. Isobutenhomopolymere speziell besitzen noch stärker bevorzugt ein zahlenmittleres Molekulargewicht $M_n$ von 500 bis 50.000 und insbesondere von 500 bis 5000, z.B. von etwa 1000 oder von etwa 2300.

Durch das erfindungsgemäße Verfahren werden Isobuten und isobutenhaltige Monomermischungen, die unter kationischen Bedingungen polymerisierbar sind, mit hohen Umsätzen in kurzen Reaktionszeiten selbst bei relativ hohen Polymerisationstemperaturen erfolgreich polymerisiert. Man erhält hochreaktive Isobutenhomo- oder -copolymere mit einem hohen Gehalt an terminalen Vinyliden-Doppelbindungen und mit einer recht engen Molekulargewichtsverteilung. Durch die Verwendung von weniger flüchtigen Fluorverbindungen in geringeren Mengen im Vergleich zu Bortrifluorid und Bortrifluorid-Addukten als Polymerisationskatalysatoren werden Abwässer und Umwelt weniger belastet. Weiterhin tritt praktisch keine Restfluorgehalt im Produkt in Form von organischen Fluorverbindungen auf.

Die vorliegende Erfindung wird durch die nachfolgenden Beispiele näher veranschaulicht.

Beispiel 1

Polymerisation von Rein-Isobuten mit der als Diethyletherat vorliegenden protonensauren Verbindung der Formel $[H(OEt_2)_2]^+\{Al[OC(CF_3)_3]_4\}^-$ (Katalysator A)

40 ml Isobuten wurden in 80 ml eines Gemisches aus gleichen Volumenteilen n-Hexan und Dichlormethan einkondensiert. Nach Abkühlung auf -40°C wurden 100 mg des Katalysators A unter Schutzatmosphäre zugegeben. Innerhalb von 10 Minuten stieg die Temperatur auf -30°C an. Nach insgesamt 45 Minuten Polymerisationsdauer wurde die Reaktion durch Zugabe von 10 ml Methanol abgebrochen, das Umsetzungsprodukt in weiterem Methanol aufgenommen und gewaschen. Nach Abdestillation der Lösungsmittel im Vakuum erhielt man 1,6 g Polyisobuten mit einem zahlenmittleren Molekulargewicht $M_n$ von 2390, einer Polydispersität von 1,6 und einem Gehalt an terminalen Vinyliden-Doppelbindungen von 91 Mol-%.

Beispiel 2

Polymerisation von Rein-Isobuten mit der protonensauren Verbindung der Formel $[H]^+\{Al[OC(CF_3)_3]_4\}^-$ (Katalysator B)

40 ml Isobuten wurden in 120 ml eines Gemisches aus gleichen Volumenteilen n-He-xan und Dichlormethan einkondensiert. Nach Abkühlung auf -30°C wurden 100 mg des Katalysators B unter Schutzatmosphäre zugegeben. Innerhalb von 10 Minuten stieg die Temperatur auf -20°C an. Nach insgesamt 30 Minuten Polymerisationsdauer wurde die Reaktion durch Zugabe von 10 ml Methanol abgebrochen, das Umsetzungsprodukt in weiterem Methanol aufgenommen und gewaschen. Nach Abdestillation der Lösungsmittel im Vakuum erhielt man bei einem Umsatz von 39 % Polyisobuten mit einem zahlenmittleren Molekulargewicht $M_n$ von 2600, einer Polydispersität von 1,8 und einem Gehalt an terminalen Vinyliden-Doppelbindungen von 90 Mol-%.

Beispiel 3

Polymerisation von Rein-Isobuten mit der protonensauren Verbindung der Formel $[H]^+\{Al[OC(CF_3)_3]_4\}^-$ (Katalysator B)

40 ml Isobuten wurden in 120 ml Dichlormethan einkondensiert. Nach Abkühlung auf -30°C wurden 100 mg des Katalysators B unter Schutzatmosphäre zugegeben. Innerhalb von 10 Minuten stieg die Temperatur auf -20°C an. Nach insgesamt 30 Minuten Polymerisationsdauer wurde die Reaktion durch Zugabe von 10 ml Methanol abgebrochen, das Umsetzungsprodukt in weiterem Methanol aufgenommen und gewaschen. Nach Abdestillation der Lösungsmittel im Vakuum erhielt man bei einem Umsatz von 28 % Polyisobuten mit einem zahlenmittleren Molekulargewicht $M_n$ von 4400, einer Polydispersität von 1,8 und einem Gehalt an terminalen Vinyliden-Doppelbindungen von 91 Mol-%.

Beispiel 4

Polymerisation von Rein-Isobuten mit der protonensauren Verbindung der Formel $[H]^+\{Al[OC(CF_3)_3]_4\}^-$ (Katalysator B)

40 ml Isobuten wurden in 120 ml Toluol einkondensiert. Nach Abkühlung auf -30°C wurden 100 mg des Katalysators B unter Schutzatmosphäre zugegeben. Innerhalb von 10 Minuten stieg die Temperatur auf -20°C an. Nach insgesamt 30 Minuten Polymerisationsdauer wurde die Reaktion durch Zugabe von 10 ml Methanol abgebrochen, das Umsetzungsprodukt in weiterem Methanol aufgenommen und gewaschen. Nach Abdestillation der Lösungsmittel im Vakuum erhielt man bei einem Umsatz von 55 % Polyisobuten mit einem zahlenmittleren Molekulargewicht $M_n$ von 6800, einer Polydispersität von 2,5 und einem Gehalt an terminalen Vinyliden-Doppelbindungen von 92 Mol-%.

Beispiel 5

Polymerisation von Raffinat 1 mit der als Diethyletherat vorliegenden protonensauren Verbindung der Formel $[H(OEt_2)_2]^+\{Al[OC(CF_3)_3]_4\}^-$ (Katalysator A)

40 ml eines technischen $C_4$-Kohlenwasserstoffstromes (Raffinat 1), enthaltend 40 Gew.-% Isobuten, wurden in 120 ml eines Gemisches aus gleichen Volumenteilen n-Hexan und Dichlormethan einkondensiert. Nach Abkühlung auf -40°C wurden 100 mg des Katalysators A unter Schutzatmosphäre zugegeben. Innerhalb von 10 Minuten stieg die Temperatur auf -30°C an. Nach insgesamt 45 Minuten Polymerisationsdauer wurde durch Zugabe von 10 ml Methanol gequencht, das Umsetzungsprodukt in weiterem Methanol aufgenommen und gewaschen. Nach Abdestillation der Lösungsmittel im Vakuum erhielt man 1,7 g Polyisobuten mit einem zahlenmittleren Molekulargewicht $M_n$ von 2500, einer Polydispersität von 2,7 und einem Gehalt an terminalen Vinyliden-Doppelbindungen von 90 Mol-%.

## Patentansprüche

1. Verfahren zur Herstellung von hochreaktiven Isobutenhomo- oder -copolymeren mit einem zahlenmittleren Molekulargewicht $M_n$ von 500 bis 1.000.000 durch Polymerisation von Isobuten oder eines Isobuten-haltigen Monomergemisches in flüssiger Phase in Gegenwart eines gelösten, dispergierten oder geträgerten metallhaltigen Katalysatorkomplexes, **dadurch gekennzeichnet, dass** man als Katalysatorkomplex eine Verbindung der allgemeinen Formel I

$$Z^{n+}\,[MX_a(OR)_b]_n^- \bullet L_x \qquad \text{(I)}$$

in der

M ein Metallatom aus der Gruppe Bor, Aluminium, Gallium, Indium und Thallium bedeutet,
die Variablen R unabhängig voneinander für aliphatische, heterocyclische oder aromatische Kohlenwasserstoffreste mit jeweils 1 bis 18 Kohlenstoffatomen, welche Fluoratome enthalten können, oder für $C_1$- bis $C_{18}$-Kohlenwasserstoffreste enthaltende Silylgruppen stehen,
die Variable X ein Halogenatom oder einen Pseudohalogenid-Rest bedeutet,
Z ein Proton (n=1), gegebenenfalls substituiertes Ammonium (n=1) oder ein n-wertiges Metallkation bezeichnet,
L neutrale Solvensmoleküle bezeichnet,
a für ganze Zahlen von 0 bis 3 und b für ganze Zahlen von 1 bis 4 steht, wobei die Summe aus a + b den Wert 4 ergeben muß, und
x eine Zahl ≥ 0 bezeichnet,
einsetzt.

2. Verfahren nach Anspruch 1, **dadurch gekennzeichnet, dass** das Metallatom M Aluminium bedeutet.

3. Verfahren nach Anspruch 1 oder 2, **dadurch gekennzeichnet, dass** die Variablen R unabhängig voneinander für $C_1$- bis $C_{21}$-Alkylreste mit 1 bis 12 Fluoratomen, insbesondere für Tris(trifluormethyl)methylreste, oder $C_6$- bis $C_{18}$-Arylreste mit 3 bis 6 Fluoratomen, insbesondere für Pentafluorphenylreste, 3- oder 4-(Trifluormethyl)phenylreste oder 3,5-Bis(trifluor-methyl)phenylreste, stehen.

4. Verfahren nach den Ansprüchen 1 bis 3, **dadurch gekennzeichnet, dass** die Variable Z ein Proton bedeutet.

5. Verfahren nach den Ansprüchen 1 bis 4, **dadurch gekennzeichnet, dass** die neutralen Solvensmoleküle ausgewählt sind aus offenkettigen und cyclischen Ethern, insbesondere aus Di-$C_1$- bis $C_3$-alkylethern, Ketonen, Thiolen, organischen Sulfiden, Sulfonen, Sulfoxiden, Sulfonsäureestern, organischen Sulfaten, Phosphanen, Phosphanoxiden, organischen Phosphiten, organischen Phosphaten, Phosphorsäureamiden, Carbonsäureestern, Carbonsäureamiden sowie Alkylnitrilen und Arylnitrilen.

6. Verfahren nach den Ansprüchen 1 bis 5 zur Herstellung von hochreaktiven Isobutenhomo- oder -copolymeren mit einem Gehalt an terminalen Vinyliden-Doppelbindungen von wenigstens 80 Mol-%.

7. Verfahren nach den Ansprüchen 1 bis 5 zur Herstellung von hochreaktiven Isobutenhomo- oder -copolymeren mit einer Polydispersität von höchstens 2,0.

## Claims

1. A process for preparing highly reactive isobutene homo- or copolymers having a number-average molecular weight $M_n$ of from 500 to 1 000 000 by polymerizing isobutene or an isobutenic monomer mixture in the liquid phase in the presence of a dissolved, dispersed or supported metal-containing catalyst complex, which comprises using, as the catalyst complex, a compound of the general formula I

$$Z^{n+}\,[MX_a(OR)_b]_n^{-} \bullet L_x \qquad (I)$$

in which

M is a metal atom from the group of boron, aluminum, gallium, indium and thallium,
the variables R are each independently aliphatic, heterocyclic or aromatic hydrocarbon radicals which have in each case from 1 to 18 carbon atoms and may comprise fluorine atoms, or are silyl groups comprising $C_1$ to $C_{18}$ hydrocarbon radicals,
the variable X is a halogen atom or a pseudohalide radical,
Z denotes a proton (n=1), optionally substituted ammonium (n=1) or an n-valent metal cation,
L denotes neutral solvent molecules,
a represents integers from 0 to 3 and b integers from 1 to 4, where the sum of a + b has to add up to the value of 4, and
x denotes a number $\geq 0$.

2. The process according to claim 1, wherein the metal atom M is aluminium.

3. The process according to claim 1 or 2, wherein the variables R are each independently $C_1$- to $C_{21}$-alkyl radicals having from to 12 fluorine atoms, especially tris(trifluoromethyl)methyl radicals, or $C_6$- to $C_{18}$-aryl radicals having from 3 to 6 fluorine atoms, especially pentafluorophenyl radicals, 3- or 4-(trifluoromethyl)phenyl radicals or 3,5-bis (trifluoromethyl)phenyl radicals.

4. The process according to claims 1 to 3, wherein the variable Z is a proton.

5. The process according to claims 1 to 4, wherein the neutral solvent molecules are selected from open-chain and cyclic ethers, in particular from di-$C_1$- to -$C_3$-alkyl ethers, ketones, thiols, organic sulfides, sulfones, sulfoxides, sulfonic esters, organic sulfates, phosphines, phosphine oxides, organic phosphites, organic phosphates, phosphoramides, carboxylic esters, carboxamides, and alkyl nitriles and aryl nitriles.

6. The process according to claims 1 to 5 for preparing highly reactive isobutene homo- or copolymers having a content of terminal vinylidene double bonds of at least 80 mol%.

7. The process according to claims 1 to 5 for preparing highly reactive isobutene homo- or copolymers having a polydispersity of at most 2.0.

## Revendications

1. Procédé de fabrication d'homo- ou de copolymères d'isobutène hautement réactifs ayant un poids moléculaire moyen en nombre $M_n$ de 500 à 1 000 000 par polymérisation d'isobutène ou d'un mélange de monomères contenant de l'isobutène en phase liquide en présence d'un complexe catalytique contenant un métal dissous, dispersé ou supporté, **caractérisé en ce qu'**un composé de formule générale I est utilisé en tant que complexe catalytique

$$Z^{n+}[MX_a(OR)_b]_n^- \cdot L_x \qquad (I)$$

dans laquelle

M représente un atome métallique du groupe du bore, de l'aluminium, du gallium, de l'indium et du thallium,
les variables R représentent indépendamment les unes des autres des radicaux hydrocarbonés aliphatiques, hétérocycliques ou aromatiques contenant à chaque fois 1 à 18 atomes de carbone, qui peuvent contenir des atomes de fluor, ou des groupes silyle contenant des radicaux hydrocarbonés en $C_1$ à $C_{16}$,
la variable X représente un atome d'halogène ou un radical pseudohalogénure,
Z représente un proton (n = 1), un ammonium éventuellement substitué (n = 1) ou un cation métallique n-valent,
L représente des molécules de solvant neutres,
a représente des nombres entiers de 0 à 3 et b des nombres entiers de 1 à 4, la somme de a + b devant avoir la valeur 4, et
x représente un nombre $\geq 0$.

2. Procédé selon la revendication 1, **caractérisé en ce que** l'atome métallique M représente l'aluminium.

3. Procédé selon la revendication 1 ou 2, **caractérisé en ce que** les variables R représentent indépendamment les unes des autres des radicaux alkyle en $C_1$ à $C_{21}$ contenant 1 à 12 atomes de fluor, notamment des radicaux tris (trifluorométhyl)méthyle, ou des radicaux aryle en $C_6$ à $C_{18}$ contenant 3 à 6 atomes de fluor, notamment des radicaux pentafluorophényle, des radicaux 3- ou 4-(trifluorométhyl)phényle ou des radicaux 3,5-bis(srifluorométhyl)phényle.

4. Procédé selon les revendications 1 à 3, **caractérisé en ce que** la variable Z représente un proton.

5. Procédé selon les revendications 1 à 4, **caractérisé en ce que** les molécules de solvant neutres sont choisies parmi les éthers à chaîne ouverte et cycliques, notamment parmi les éthers de dialkyle en $C_1$ à $C_3$, les cétones, les thiols, les sulfures organiques, les sulfones, les sulfoxydes, les esters d'acide sulfonique, les sulfates organiques, les phosphanes, les oxydes de phosphane, les phosphites organiques, les phosphates organiques, les amides d'acide phosphorique, les esters d'acide carboxylique, les amides d'acide carboxylique, ainsi que les nitriles d'alkyle et les nitriles d'aryle.

6. Procédé selon les revendications 1 à 5 pour la fabrication d'homo- ou de copolymères d'isobutène hautement réactifs ayant une teneur en doubles liaisons vinylidène terminales d'au moins 80 % en moles.

7. Procédé selon les revendications 1 à 5 pour la fabrication d'homo- ou de copolymères d'isobutène hautement réactifs ayant une polydispersité d'au plus 2,0.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2702604 A
- EP 145235 A
- US 5408018 A
- WO 9964482 A
- EP 1344785 A
- WO 03037940 A
- DE 10356768 A
- JP 2005272524 A


### In der Beschreibung aufgeführte Nicht-Patentliteratur


- **T. S. Barbarich et al.** *Organometallics,* 1996, vol. 15, 3776-3778
- *Journal of Molecular Catalysis A: Chemical,* 1998, vol. 128, 289-331
- **I.Krossing et al.** *European Journal of Inorganic Chemistry,* 2005, 1979-1989